# EUROPEAN PATENT SPECIFICATION

(11) **EP 3 589 412 B1**
(45) Date of publication and mention of the grant of the patent: **07.04.2021**
(21) Application number: 18714834.1
(22) Date of filing: 22.02.2018
(51) Int. Cl.: B02C 4/28, B02C 4/42, B02C 21/00, B02C 21/02, B02C 23/02, B02C 25/00

(54) **A CONTROL METHOD OF A TREATMENT PLANT OF ELEMENTS TO BE RECYCLED OR DISPOSED AND A TREATMENT PLANT OF ELEMENTS TO BE RECYCLED OR DISPOSED**
STEUERUNGSVERFAHREN EINER BEHANDLUNGSANLAGE VON ZU RECYCELNDEN ODER BESEITIGENDEN ELEMENTEN UND EINE BEHANDLUNGSANLAGE VON ZUR RECYCELNDEN ODER BESEITIGENDEN ELEMENTEN
PROCÉDÉ DE COMMANDE D'UNE INSTALLATION DE TRAITEMENT D'ÉLÉMENTS À RECYCLER OU À ÉLIMINER, ET INSTALLATION DE TRAITEMENT D'ÉLÉMENTS À RECYCLER OU À ÉLIMINER

(30) Priority: 02.03.2017 IT 201700023354
(43) Date of publication of application: 08.01.2020
(73) Proprietor: CAMS S.r.l., 40024 Castel San Pietro Terme (BO) (IT)
(72) Inventor: VENTURI, Marco, 40133 Bologna (IT); BIAVATI, Mauro, 44122 Ferrara (IT)
(74) Representative: Trentin, Michele
(86) International application number: PCT/IB2018/051103
(87) International publication number: WO 2018/158664

(56) References cited:
- EP-A1- 1 545 803
- US-A1- 2002 170 367
- US-A1- 2011 077 821

## Description

### Definitions

In the present invention, the term "elements to be recycled or disposed of" means construction residual materials, road residual materials, foundry wastes, mineral processing wastes, glass processing wastes, plastic processing wastes, or the like.

### Field of application

The present invention is generally applicable to the technical field of the disposal of processing or dismantling residues of buildings, objects, plants, and refers to the treatment of elements to be recycled or disposed of such as debris deriving from the demolition of buildings, or from the removal or reconstruction of different works, or the like, residues from metals, plastics, or glass processing, or the like.

More in detail, the present invention relates to a treatment plant for elements to be recycled or disposed of in order to reduce their size.

### State of the art

Even partial demolition of buildings due to restructuring or due to destructive events as well as the rebuilding of different works or other human works generates typically rubble having large sizes. They must obviously be disposed of, and often their size, combined with the corresponding weight they have, make this disposal complex, and sometimes very difficult.

In this sense, different types of machines for reducing the size of the rubble are known. First of all, the rubble crushers are known that allow to reduce large slabs, portions of beams or the like, in boulders of smaller dimensions.

However, it is generally necessary that the material from the reducing treatment is particularly compact, and similar, for example, to sand or, at least, to pebbles. In order to achieve this, screenings and crushing rolls are generally used, the operation of which allows to properly chop the residue obtained from a crusher.

Since the operations of loading of the crusher and the unloading of the crushed material, and of loading of a screen and loading of a crushing roll require time and the intervention of a specialized workmanship, in order to optimize the processing and reduce the costs, machines or treatment plants have been designed for elements to be recycled or disposed of, which incorporate or have series of several processing stations such as crushers, screens and crushing rolls. In this sense, they typically also include conveyor belts for transferring the material from one station to another.

These machines and plants, however, are subject to working interruptions or failure and, in any case, to the continuous monitoring and intervention of personnel. It is also known that the interruptions of the various work stations takes a few seconds to completely stop the motors and then to restart them. Since the machine downtime can occur various times in a day's work due to the mixed composition of the residue to be treated, it follows that at the end of the day the lack in productivity becomes significant.

Typically, the crushing roll is the last station of the line and is the one that, in the event of problems, is likely to cause the blockage of all the other stations. Since its operation can be seriously compromised by the incorrect providing of material, it is essential that the screen that operates immediately upstream is perfectly operational and correctly functioning.

However, in the case where excessive amount of material or too large material arrive to the screen, it tends to slow down the vibrations due to overload or because it reduces the amplitude of the oscillations, or because it slows down the rotation speed of the shafts generating them. The tendency to accumulate more and more material on oneself due to an excessive arrival of material results also in reducing the vibrations themselves, worsening the problem.

In such cases, therefore, it is necessary to stop the transfer of the material to the screen, in order to give it the possibility to free by itself, or to require the intervention of an operator.

However, these operations result in the necessary stopping of the upstream processing stations as well as the stopping of the crushing roll due to the lack of residues to be reduced. The result is therefore the complete shut-down of the plant. A method and apparatus for controlling a vibrating screening machine in material treatment plants according the preamble of claims 1 and 4 is disclosed in document EP1545803A1.

### Presentation of the invention

The object of the present invention is to overcome at least partially the drawbacks noted above, providing a treatment plant for elements to be recycled or disposed of which allows reducing, if not eliminating at all, the risk of having to stop it during processing.

Within the scope of this general purpose, a particular object is to avoid that a possible decrease of the vibrations of the screen with respect to the desired values results in, if not in particular cases, the complete shut-down of all the stations of the plant.

Another object of the invention is to provide a treatment plant which allows to avoid or minimize the presence of specialized personnel who monitor its operation.

In other words, an object of the present invention is to provide a treatment plant for materials to be recycled or disposed, which has a processing yield higher than the known equivalent plants so as to minimize the costs in terms of personnel to be dedicated to its operation and in economic terms.

Such aims, as well as others which will be clearer below, are achieved by a control method of a treatment plant for elements to be recycled or disposed of according to the following claims, which are to be considered as an integral part of this patent.

In particular, the plant controlled according to the method of the invention comprises at least one crushing roll for a reduction in size of the elements to be recycled or disposed of, and at least one screen to allow passage to the crushing roll only of elements having a size greater than predetermined sizes.

The screen is provided with one or more rotary shafts to generate its vibrations.

With the plant thus configured, the method of the invention comprises a measurement step, preferably but not necessarily by means of appropriate accelerometric sensors, of the vibration intensity of the screen.

Then there is provided a comparison step of the measured value to a desired value. If the difference between these values is higher than a predetermined threshold value, there is an increasing step of the rotation speed of the screen shafts to increase the frequency of the generated vibrations.

In particular, the decrease of the vibration frequency may be due either to a decrease in shaft speed or to a decrease in the eccentricity of the screen oscillation due to the overload.

Advantageously, therefore, the increase in rotation speed of the screen shafts following the detection of this decrease in vibration intensity or frequency allows to restore the desired values before the machine downtime is required.

If this is not yet sufficient, according to another aspect of the invention, the method also includes a step of slowing down the feed of the conveyor belt. Advantageously, this allows to avoid worsening even more the work that the screen must perform, slowing down even more its vibrations.

Although there is a slowdown in the productivity of the treatment plant, this in most cases avoids the complete machine downtime.

It is evident, therefore, that with the proposed solution the productivity of the plant of the invention is increased with respect to the known equivalent plants.

From the above, it is evident that said objects are achieved by a treatment plant for elements to be recycled or disposed of, comprising:
- at least one crushing roll for a reduction in size of the elements to be recycled or disposed of;
- at least one screen provided with one or more rotary shafts for the generation of its vibrations and operatively arranged upstream to said crushing roll to allow passage to said crushing roll only of elements having a size larger than predetermined sizes;
said screen comprising also:
- one or more accelerometric sensors for measuring the vibration intensity of said screen;
- at least one control circuit operatively connected to said accelerometric sensors and at least to said screen, in order to increase the rotation speed of said shafts in the event the difference between said measured intensity and said desired intensity is greater than a predetermined threshold value.

Advantageously, inter alia, the presence of the control circuit allows to reduce, and possibly eliminate at all, the need for the presence of personnel in charge of controlling and managing the plant of the invention with respect to what happens for the known equivalent plants.

This still allows, advantageously, to further increase the yield of the plant according to the invention by reducing operating costs.

### Brief Description of the Drawings

Further features and advantages of the invention will be more apparent in light of the detailed description of some preferred, but not exclusive, embodiments of a method of controlling a treatment plant for elements to be recycled or disposed of according to the invention, illustrated by way of non-limiting example with the aid of the accompanying drawings tables, wherein:
FIG. 1 represents a plant for processing elements to be recycled or disposed of according to the invention in an axonometric view;
FIG. 2 represents a further axonometric view of the plant of FIG. 1;
FIG. 3 represents a detail of the plant of FIG. 1.

### Detailed description of an exemplary preferred embodiment of the invention

As previously mentioned, the object of the patent is both a method of controlling a treatment plant for elements to be recycled or disposed, and the plant itself.

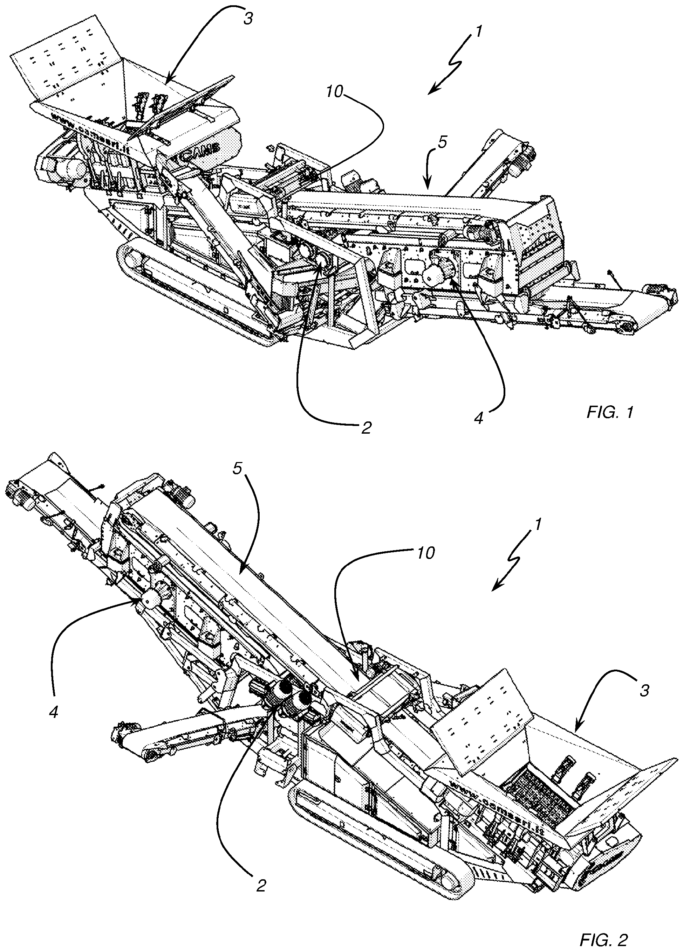

In this sense, with reference to the figures above, and in particular to FIGS. 1 and 2, a treatment plant 1 for elements to be recycled or disposed of is described, which is typically usable for the reduction of such residues to a resulting material having a size like to sand or, at most, to pebbles.

For this reason, the plant 1 of the invention comprises a crushing roll 2 for a reduction in size of the residues.

Typically, however, the size of the residues is often particularly large so that, according to an aspect of the invention, the plant also comprises a crusher 3 for reducing the size of the residues.

Advantageously, therefore, the plant 1 can comprise two or more crushing stations for elements to be recycled or disposed of, in order to extend the type of residues to be treated.

According to another aspect of the invention, a screen 4 is interposed operatively upstream of the crushing roll **2,** and downstream of the crusher **3,** if present, to allow passage to the crushing roll **2** only of residues having a size larger than predetermined sizes. In this way, advantageously, the likelihood that the crushing roll **2** must devote time to the processing of material already reduced in size is reduced.

Downstream of the crushing roll **2** there is a recirculation circuit whose function is to bring the treated material back to the screen **4** so as to ensure that, in the case of the non-conforming material coming out of the crushing roll **2,** it undergoes further processing by the crushing roll **2** itself.

In order to correctly manage the flow to the screen **4** of the residue, a conveyor belt **5** is typically, but not necessarily, arranged upstream of the same. The latter is particularly advantageous if the plant **1** also includes the crusher **3.**

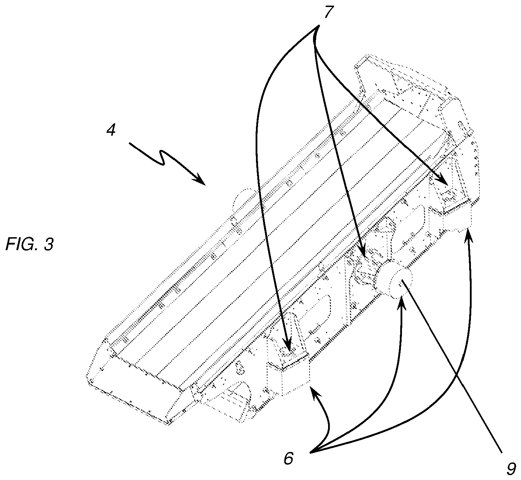

According to the described embodiment, the screen **4** typically comprises, as can be seen in the detail of FIG. 3, a plurality of shafts **6** whose rotation generates the vibrations of the screen **4** itself.

According to another aspect of the invention, the screen **4** also comprises accelerometric sensors **7** for measuring the vibration intensity of the screen **4.**

There is also provided a control circuit **9** operatively connected to the accelerometric sensors **7** and to the shafts **6** of the screen **4** to increase their rotation speed, and therefore the vibration frequency or intensity of the screen **4,** if the difference between the measured intensity and the desired intensity is higher than a predetermined threshold value.

In other words, the performed measurement indicates the capacity of the screen **4** to vibrate according to the work load to which it is subjected. Accordingly, it indicates whether the screen **4** is affected by excessively sized material and/or by overload.

If a difference between the two values exceeds a predetermined threshold value from the comparison, than the control circuit **9** commands an acceleration of the rotation of the shafts **6** to compensate for the difference in vibration intensity.

Advantageously, therefore, if the screen **4** is subjected to excessive work, a measure of the magnitude of the vibrations makes it possible to detect this phenomenon.

Still advantageously, the consequent modification of the configuration of the screen **4** itself allows to avoid any damages to the screen **4** or to reach a point such as to force the machine to stop.

In this way, still advantageously, the productivity of the treatment plant **1** is increased with respect to the known equivalent plants, since the situations which require it to stop are reduced.

Still advantageously, the presence of the control circuit **9** allows to reduce, and possibly eliminate at all, the need for the presence of personnel in charge of controlling and managing the plant **1** of the invention with respect to what happens for the known equivalent plants.

This still allows, advantageously, to further increase the yield of the plant **1** according to the invention by reducing operating costs.

Obviously, the number of crushers, conveyor belts, screens and crushing rolls are non-limiting characteristics of the invention, since it can be any number. Likewise, neither the number of accelerometric sensors nor the number of screen shafts should be considered as limiting.

As previously mentioned, the object of the present patent is also the method of managing the plant **1** described above.

According to an aspect of the invention, the method comprises a step of measuring the vibration intensity of the screen **4.** As said, such measurement indicates the capacity of the screen **4** to vibrate according to the work load to which it is subjected.

Then follows a step for comparing the measured value to a desired intensity value, i.e., to a value according to which the screen **4** has been configured.

If the comparison shows a difference between the two values above a predetermined threshold value, than there is a subsequent step of reconfiguration of the screen **4** to increase the vibration intensity thereof. As said, according to the embodiment of the invention that is described, this effect is obtained by increasing the rotation speed of the shafts **6.**

The measurement, comparison and increasing steps of the rotation speed of the shafts **6** are then repeated, and, if there is an excessive increase in the vibrations of the screen **4,** a sign of overcoming the problem, there is a step of resetting the plant 1 to the initial values.

Advantageously, therefore, not only the control on the screen 4 prevents as far as possible a subsequent machine downtime as well as the useless transfer to the crushing roll 2 of material having an already suitable size, but also allows to restore as soon as possible the operating effectiveness optimizing the production and maximizing profits.

According to another aspect of the invention, since the exceeding of the threshold value could indicate that the screen **4** is subjected to an excessive load, the method of the invention also comprises a step of decreasing the feed speed of the conveyor belt **5** to decrease the transfer of material.

The above leads to a slowdown in the productivity of the treatment plant **1.** However, if the plant **1** continued at an unchanged pace, the operators would then be forced to perform a downtime, thus reducing overall productivity thereof.

The slowing down of the conveyor belt **5** speed, however, could cause an excessive increase in the material lying thereon.

For this reason, according to another aspect of the invention, the plant **1** also comprises a volumetric sensor **10** for measuring the residue lying on the conveyor belt **5.** It is also connected to the control circuit **9** to which the crusher **3** is also operatively connected so as to modify its operation accordingly.

In particular, the control method of the invention comprises a step of slowing down the operation of the crusher **3** in case the volume of the residue lying on the conveyor belt **5** exceeds a predetermined value. If this trend continues, there is also provided a subsequent step of stopping the crusher **3.**

If the operation of the screen **4** allows a normal reception of material (both in the case the increase in the rotation speed of the shafts **6** has lead to the desired effects, and in the case of restoration of the normal values following a ceased alarm), the optimal processing settings for the implant **1** of the invention can be restored.

Since the primary purpose of the present invention is to limit as far as possible the machine downtime, with the plant **1** of the invention such situation occurs only in particular cases, and therefore the productivity is certainly increased compared to known equivalent plants.

For this reason it is clear that the method of the invention of controlling a treatment plant for elements to be recycled or disposed of, as well as the plant itself, achieve all the intended purposes.

In particular, the risk of having to completely stop the plant during processing is reduced, if not eliminated at all.

Furthermore, the need for the presence of specialized personnel within the machine is avoided or minimized.

More specifically, the processing efficiency of the plant of the invention controlled by the method of the invention is higher than the known equivalent plants, inter alia, also minimizing the costs in terms of personnel to be dedicated to its operation.

The invention may be subject to many changes and variations, which are all included in the appended claims. Moreover, all the details may furthermore be replaced by other technically equivalent elements, and the materials may be different depending on the needs, without departing from the scope of protection of the invention defined by the appended claims.

## Claims

1. A control method of a treatment plant (**1**) for elements to be recycled or disposed of comprising:
- at least one crushing roll (**2**) for a reduction in size of the elements to be recycled or disposed of;
- at least one screen (**4**) provided with one or more rotary shafts (**6**) for the generation of its vibrations and operatively arranged upstream to said crushing roll (**2**) to allow passage to said crushing roll (**2**) only to elements to be recycled or disposed of having a larger size than predetermined sizes,
said method comprising:
- a measuring step of the vibration intensity of said screen (**4**);
- a comparing step of said measured vibration intensity with a desired value;
- an increasing step of the rotation speed of said shafts (**6**) of said screen (**4**) to increase said vibration intensity if the difference between said measured vibration intensity and said desired vibration intensity is greater than a predetermined threshold value.

2. Method according to claim 1 **wherein** said plant (**1**) comprises a conveyor belt (**5**) operatively arranged upstream of said screen (**4**) for conveying and transferring the elements to be recycled or disposed of, said method also comprising a decreasing step of the feed speed of said conveyor belt (**5**) simultaneously with said increasing step of said rotation speed of said shafts (**6**).

3. Method according to claim 2, **wherein** said plant (**1**) comprises also a crusher (**3**) operatively arranged upstream of said conveyor belt (**5**) for a first roughing out of the size of the elements to be recycled or disposed of, said method also comprising a slowing down or stopping step of the operation of said crusher (**3**) in case the volume of the elements to be recycled or disposed of lying on said conveyor belt (**5**) exceeds a predetermined value.

4. A treatment plant for elements to be recycled or disposed of, comprising:
- at least one crushing roll (**2**) for a reduction in size of the elements to be recycled or disposed of;
- at least one screen (**4**) provided with one or more rotary shafts (**6**) for the generation of its vibrations and operatively arranged upstream of said crushing roll (**2**) to allow passage to said crushing roll (**2**) only of elements to be recycled or disposed of, having a larger size than predetermined sizes;
said plant (**1**) is **characterized in that** it comprises:
- one or more accelerometric sensors (**7**) for measuring the vibration intensity of said screen (**4**);
- at least one control circuit (**9**) operatively connected to said accelerometric sensors (**7**) and at least to said screen (**4**), in order to increase the rotation speed of said shafts (**6**) in case the difference between said measured vibration intensity and a desired vibration intensity is greater than a predetermined threshold value.

5. Plant according to claim 4, comprising at least one conveyor belt (**5**) operatively arranged upstream of said screen (**4**) for conveying and transferring the elements to be recycled or disposed to said screen (**4**).

6. Plant according to claim 4 or 5, comprising at least one crusher (**3**) operatively arranged upstream of said conveyor belt (**5**) for a first roughing out of the size of the elements to be recycled or disposed.

7. Plant according to claim 6, comprising at least one volumetric sensor (**10**) for measuring the elements to be recycled or disposed treated by said crusher (**3**) and lying on said conveyor belt (**5**), said control circuit (**9**) being operatively connected to said volumetric sensor (**10**) and to said crusher (**3**) to vary the crushing speed in case the volume measurements exceed a predetermined value.

## Patentansprüche

1. Steuerverfahren einer Behandlungsanlage (1) für zu recycelnde oder zu entsorgende Elemente, umfassend:
- mindestens eine Brechwalze (2) für eine Größenreduktion der zu recycelnden oder zu entsorgenden Elemente;
- mindestens ein Sieb (4), das mit einer oder mehreren Drehwellen (6) zur Erzeugung seiner Vibrationen vorgesehen und stromaufwärts von der Brechwalze (2) wirkangeordnet ist, um nur für zu recycelnde oder zu entsorgende Elemente mit einer größeren Größe als vorbestimmte Größen einen Durchgang zu der Brechwalze (2) zu ermöglichen,
wobei das Verfahren umfasst:
- einen Messschritt der Vibrationsstärke des Siebs (4) ;
- einen Vergleichsschritt der gemessenen Vibrationsstärke mit einem gewünschten Wert;
- einen Erhöhungsschritt der Drehgeschwindigkeit der Wellen (6) des Siebs (4), um die Vibrationsstärke zu erhöhen, wenn die Differenz zwischen der gemessenen Vibrationsstärke und der gewünschten Vibrationsstärke größer ist als ein vorbestimmter Schwellenwert.

2. Verfahren nach Anspruch 1, wobei die Anlage (1) ein Förderband (5) umfasst, das stromaufwärts von dem Sieb (4) wirkangeordnet ist, zum Befördern und Übertragen der zu recycelnden oder zu entsorgenden Elemente, wobei das Verfahren auch einen Verringerungsschritt der Zufuhrgeschwindigkeit des Förderbandes (5) gleichzeitig mit dem Erhöhungsschritt der Drehgeschwindigkeit der Wellen (6) umfasst.

3. Verfahren nach Anspruch 2, wobei die Anlage (1) auch einen Brecher (3) umfasst, der stromaufwärts von dem Förderband (5) wirkangeordnet ist, für eine erste Grobbearbeitung der Größe der zu recycelnden oder zu entsorgenden Elemente, wobei das Verfahren auch einen Verlangsamungs- oder Anhaltschritt des Betriebs des Brechers (3) in einem Fall umfasst, in dem das Volumen der zu recycelnden oder zu entsorgenden Elemente, die auf dem Förderband (5) liegen, einen vorbestimmten Wert überschreitet.

4. Behandlungsanlage für zu recycelnde oder zu entsorgende Elemente, umfassend:
- mindestens eine Brechwalze (2) für eine Größenreduktion der zu recycelnden oder zu entsorgenden Elemente;
- mindestens ein Sieb (4), das mit einer oder mehreren Drehwellen (6) zur Erzeugung seiner Vibrationen vorgesehen und stromaufwärts von der Brechwalze (2) wirkangeordnet ist, um nur für zu recycelnde oder zu entsorgende Elemente mit einer größeren Größe als vorbestimmte Größen einen Durchgang zu der Brechwalze (2) zu ermöglichen;
wobei die Anlage (1) **dadurch gekennzeichnet ist, dass** sie umfasst:
- einen oder mehrere Beschleunigungssensoren (7) zum Messen der Vibrationsstärke des Siebs (4);
- mindestens eine Steuerschaltung (9), die mit den Beschleunigungssensoren (7) und mindestens mit dem Sieb (4) wirkverbunden ist, um die Drehgeschwindigkeit der Wellen (6) in einem Fall zu erhöhen, in dem die Differenz zwischen der gemessenen Vibrationsstärke und einer gewünschten Vibrationsstärke größer ist als ein vorbestimmter Schwellenwert.

5. Anlage nach Anspruch 4, umfassend mindestens ein Förderband (5), das stromaufwärts von dem Sieb (4) wirkangeordnet ist, zum Befördern und Übertragen der zu recycelnden oder zu entsorgenden Elemente zu dem Sieb (4) .

6. Anlage nach Anspruch 4 oder 5, umfassend mindestens einen Brecher (3), der stromaufwärts von dem Förderband (5) wirkangeordnet ist, für eine erste Grobbearbeitung der Größe der zu recycelnden oder zu entsorgenden Elemente.

7. Anlage nach Anspruch 6, umfassend mindestens einen Volumensensor (10) zum Messen der zu recycelnden oder zu entsorgenden Elemente, die durch den Brecher (3) behandelt werden und auf dem Förderband (5) liegen, wobei die Steuerschaltung (9) mit dem Volumensensor (10) und mit dem Brecher (3) wirkverbunden ist, um die Brechgeschwindigkeit in einem Fall zu verändern, in dem die Volumenmessungen einen vorbestimmten Wert überschreiten.

## Revendications

1. Procédé de commande d'une installation de traitement (1) pour des éléments à recycler ou à éliminer, comprenant :
- au moins un rouleau de broyage (2) pour une réduction de la taille des éléments à recycler ou à éliminer ;
- au moins un tamis (4) pourvu d'un ou de plusieurs arbres rotatifs (6) pour la génération de ses vibrations et agencé de manière fonctionnelle en amont dudit rouleau de broyage (2) pour permettre le passage vers ledit rouleau de broyage (2) seulement aux éléments à recycler ou à éliminer présentant une taille supérieure à des tailles prédéterminées,
ledit procédé comprenant :
- une étape de mesure de l'intensité de vibration dudit tamis (**4**) ;
- une étape de comparaison de ladite intensité de vibration mesurée avec une valeur souhaitée ;
- une étape d'augmentation de la vitesse de rotation desdits arbres (**6**) dudit tamis (**4**) pour augmenter ladite intensité de vibration si la différence entre ladite intensité de vibration mesurée et ladite intensité de vibration souhaitée est supérieure à une valeur de seuil prédéterminée.

2. Procédé selon la revendication 1, **dans lequel** ladite installation (**1**) comprend une courroie transporteuse (**5**) agencée de manière fonctionnelle en amont dudit tamis (**4**) pour transporter et transférer les éléments à recycler ou à éliminer, ledit procédé comprenant également une étape de réduction de la vitesse d'alimentation de ladite courroie transporteuse (**5**) simultanément avec ladite étape d'augmentation de ladite étape de rotation desdits arbres (**6**).

3. Procédé selon la revendication 2, **dans lequel** ladite installation (**1**) comprend également un broyeur (**3**) agencé de manière fonctionnelle en amont de ladite courroie transporteuse (**5**) pour une première ébauche de la taille des éléments à recycler ou à éliminer, ledit procédé comprenant également une étape de ralentissement ou d'arrêt du fonctionnement dudit broyeur (**3**) dans le cas où le volume des éléments à recycler ou à éliminer se trouvant sur ladite courroie transporteuse (**5**) dépasse une valeur prédéterminée.

4. Installation de traitement pour des éléments à recycler ou à éliminer, comprenant :
- au moins un rouleau de broyage (**2**) pour une réduction de la taille des éléments à recycler ou à éliminer ;
- au moins un tamis (**4**) pourvu d'un ou de plusieurs arbres rotatifs (**6**) pour la génération de ses vibrations et agencé de manière fonctionnelle en amont dudit rouleau de broyage (**2**) pour permettre le passage vers ledit rouleau de broyage (**2**) seulement des éléments à recycler ou à éliminer présentant une taille supérieure à des tailles prédéterminées,
ladite installation (**1**) est **caractérisée en ce qu'**elle comprend :
- un ou plusieurs capteurs accélérométriques (**7**) pour mesurer l'intensité de vibration dudit tamis (**4**) ;
- au moins un circuit de commande (**9**) relié de manière fonctionnelle auxdits capteurs accélérométriques (**7**) et au moins au dit tamis (**4**) afin d'augmenter la vitesse de rotation desdits arbres (**6**) dans le cas où la différence entre ladite intensité de vibration mesurée et une intensité de vibration souhaitée est supérieure à une valeur de seuil prédéterminée.

5. Installation selon la revendication 4, comprenant au moins une courroie transporteuse (**5**) agencée de manière fonctionnelle en amont dudit tamis (**4**) pour transporter et transférer les éléments à recycler ou à éliminer vers ledit tamis (**4**).

6. Installation selon la revendication 4 ou 5, comprenant au moins un broyeur (**3**) agencé de manière fonctionnelle en amont de ladite courroie transporteuse (**5**) pour une première ébauche de la taille des éléments à recycler ou à éliminer.

7. Installation selon la revendication 6, comprenant au moins un capteur volumétrique (**10**) pour mesurer les éléments à recycler ou à éliminer traités par ledit broyeur (**3**) et se trouvant sur ladite courroie transporteuse (**5**), ledit circuit de commande (**9**) étant relié de manière fonctionnelle au dit capteur volumétrique (**10**) et au dit broyeur (**3**) pour faire varier la vitesse de broyage dans le cas où les mesures de volume dépassent une valeur prédéterminée.
